(19) Europäisches Patentamt European Patent Office Office européen des brevets

(11) EP 2 359 989 B1

(12) **EUROPEAN PATENT SPECIFICATION**

(45) Date of publication and mention
of the grant of the patent:
**24.07.2013 Bulletin 2013/30**

(51) Int Cl.:
**B25J 9/16** *(2006.01)*

(21) Application number: **10153641.5**

(22) Date of filing: **15.02.2010**

(54) **Robot control with bootstrapping inverse kinematics**

Robotersteuerung mit Bootstrapping Inverse Kinematik

Contrôle de robot au moyen de modèle de cinématique inverse bootstrap

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**24.08.2011 Bulletin 2011/34**

(73) Proprietor: **Honda Research Institute Europe GmbH**
**63073 Offenbach/Main (DE)**

(72) Inventors:
• **Dr. Gienger, Michael**
**63165 Mülheim am Main (DE)**
• **Dr. Steil, Jochen J.**
**33615 Bielefeld (DE)**
• **Rolf, Matthias**
**33739 Bielefeld (DE)**

(74) Representative: **Rupp, Christian et al**
**Mitscherlich & Partner**
**Patent- und Rechtsanwälte**
**Sonnenstraße 33**
**80331 München (DE)**

(56) References cited:
• **YUTAKA MAEDA ET AL: "Learning Rules for Neuro-Controller via Simultaneous Perturbation" IEEE TRANSACTIONS ON NEURAL NETWORKS, IEEE SERVICE CENTER, PISCATAWAY, NJ, US, vol. 8, no. 5, 1 September 1997 (1997-09-01), XP011040044 ISSN: 1045-9227**
• **ONOZATO K ET AL: "Learning of inverse-dynamics and inverse-kinematics for two-link SCARA robot using neural networks" SICE '07. 46TH SICE ANNUAL CONFERENCE 17-20 SEPT. 2007 TAKAMATSU, JAPAN, 20 September 2007 (2007-09-20), pages 1031-1034, XP002597032 SICE '07. 46th SICE Annual Conference IEEE Piscataway, NJ, USA ISBN: 978-4-907764-27-2**
• **COLOMBANO S P ET AL: "Goal directed model inversion" PROCEEDINGS OF THE INTERNATIONAL JOINT CONFERENCE ON NEURAL NETWORKS. SINGAPORE, NOV. 18 - 21, 1991; [PROCEEDINGS OF THE INTERNATIONAL JOINT CONFERENCE ON NEURAL NETWORKS], NEW YORK, IEEE, US LNKD- DOI:10.1109/IJCNN. 1991.170751, vol. -, 18 November 1991 (1991-11-18), pages 2422-2427, XP010054504 ISBN: 978-0-7803-0227-3**

**Description**

The invention is in the field of robotics and in particular in the field of robot effector control, where the effector has redundant degrees of freedom. It provides a method for effector control, as well as a system applying the method for effector control.

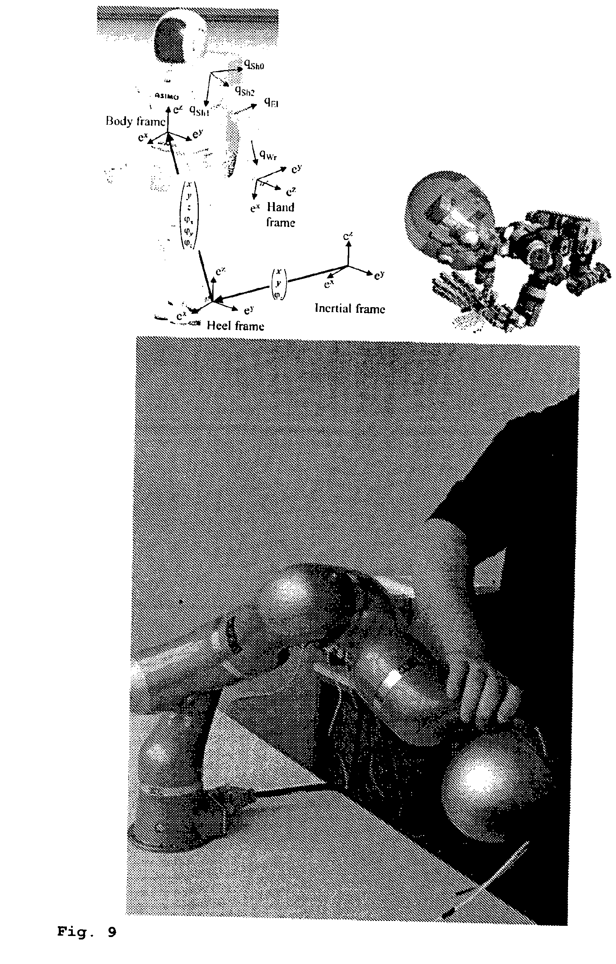

The invention can be applied for the control of redundant systems, where some target property x of the system has a desired value. This target has to be applied by means of an action. Examples for such systems are robots with redundant degrees of freedom, for instance humanoid robots or redundant robot arms (see Fig. 9). Examples for target properties include the position or orientation of the robot's hands, but also the gaze direction. Actions can be the angles or particular joints of the robot, but also more complex actions like walking to a certain position in space. In such cases the dimension of the action space usually widely exceeds the dimension of the target property, and multiple ways exist to apply the same target value. The invention allows finding a function that directly suggests a correct action for a desired target.

A robot is a machine which has some ability to interact with physical objects and to be given electronic programming to perform a task or a range of tasks or actions. It may also have some ability to perceive and absorb data on physical objects or on its local physical environment, to process data, and/or to respond to various stimuli. While a robot traditionally refers to a mechanical device or system controlled by electric and/or electronic components, the term robot might also refer to software simulations of such a device or system.

Typically, the robot accepts an input signal or input pattern by a sensor, and processes it by hardware units and software components. An output signal or output pattern is obtained, which may serve as input to other systems for further processing, e.g. for effector control. The input signal may be supplied by one or more sensors, e.g. for visual or acoustic sensing, but also by a software or hardware interface. The output pattern may as well be output through a software and/or hardware interface or may be transferred to another processing unit or actor, which may be used to influence the actions or behavior of a robot or vehicle.

In order to process the obtained real-world information (observations), computations and transformations required by the invention and necessary for effector control, may be performed by a processing means such as one or more processors (CPUs), signal processing units or other calculation, processing or computational hardware and/or software, which might also be adapted for parallel processing. Processing and computations may be performed on standard off the shelf (OTS) hardware or specially designed hardware components. A CPU of a processor may perform the calculations and may include a main memory (RAM, ROM), a control unit, and an arithmetic logic unit (ALU). It may also address a specialized graphic processor, which may provide dedicated memory and processing capabilities for handling the computations needed.

Also data storage is usually provided for a robot. The data storage is used for storing information and/or data obtained, needed for processing and results. The storage also allows storing or memorizing observations related to events and knowledge deducted therefrom to influence actions and reactions for future events.

The storage may be provided by devices such as a hard disk (SSD, HDD), RAM and/or ROM, which may be supplemented by other (portable) storage media such as floppy disks, CD-ROMs, Tapes, USB drives, smartcards, pendrives etc. Hence, a program encoding a method according to the invention as well as data acquired, processed, learned or needed in/for the application of the inventive system and/or method may be stored in a respective storage medium.

In particular, the method described may be provided as a software program product on a (e.g., portable) physical storage medium which may be used to transfer the program product to a processing system or a computing device in order to instruct the system or device to perform a method according to this invention. Furthermore, the method may be directly implemented on a computing device or may be provided in combination with the computing device.

Machine learning is applied to teach the robot. Machine learning is concerned with the design and development of algorithms allowing a robot through its processing means to learn a behavior or to change its behavior based on data, such as from sensor data or databases. A focus of machine learning is to automatically learn to recognize complex patterns and make intelligent decisions based on data. Hence, machine learning is closely related to fields such as statistics, probability theory, data mining, pattern recognition, artificial intelligence, adaptive control, and theoretical computer science.

Common machine learning algorithm types include supervised learning (which generates a function mapping inputs to desired outputs), unsupervised learning (e.g. a set of inputs is modeled), semi-supervised learning (both labeled and unlabeled examples are combined to generate an appropriate function or classifier), reinforcement learning (it is learned how to act given an observation of the world), transduction (predict new outputs based on training inputs, training outputs, and test inputs), "learning to learn" (learns a own inductive bias based on previous experience) and/or pareto-based multi-objective learning (a Pareto-based approach to learning that results in a set of learning models, which typically trades off between performance and complexity).

Further, the invention can also be applied in various other domains, one of them being robotics but as well applied in systems for ground, water and/or air bound vehicles, including systems designed to assist a human operator.

**Background of the invention**

The invention bases on the finding of an inverse kinematics function for a robot.

The forward kinematics function $f(q) = x$ uniquely describes the relation between the robots joint angles $q \, \varepsilon \, Q \subset R^m$ and the pose of the robot's effector $x \, \varepsilon \, X \subset$

$R^n$ (e.g. position of the hand). If a robot's effector (e.g. a hand) needs to be positioned at some desired coordinate $x^*$, a mechanism is needed to find appropriate joint angles $q$ that apply the desired coordinate to the effector ($f(q) = x^*$).

Despite feedback-based control mechanisms (like the one described in [1]), the direct specification of an inverse function $g(x^*) - q$ such that $f(g(x^*)) = x^*$ can be used to control the robot. However, such a function is not uniquely defined if the number of joint angles m ("degrees of freedom") exceeds the number of controlled dimensions n.

In this case of a redundant kinematic structure an inverse function cannot be found analytically. Here multiple joint configurations $q_i$ can result in the same effector pose x.

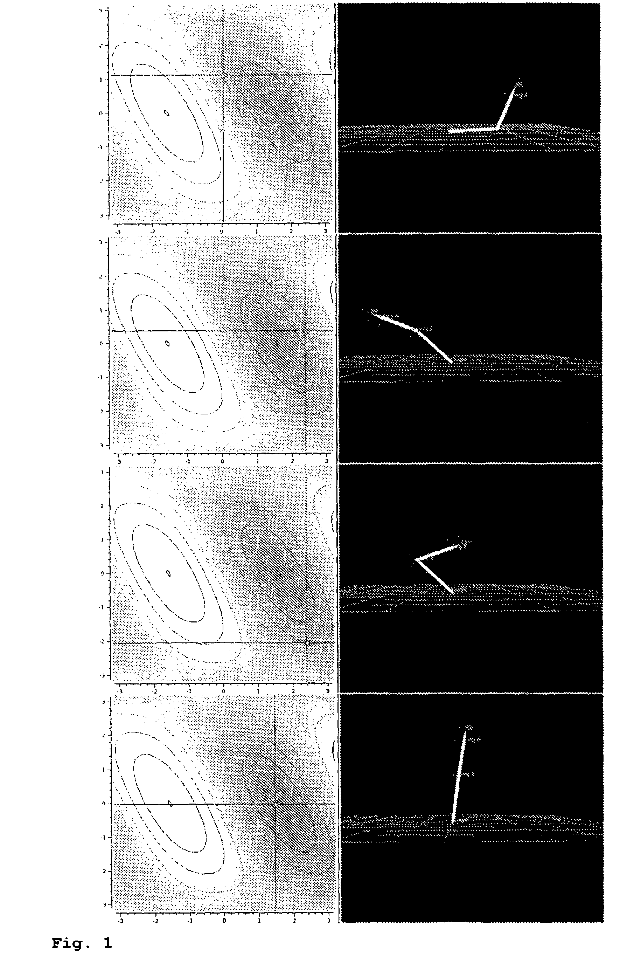

An example is shown in Fig. 1. A robot arm with two joints (m = 2) and a total length of 1m. Here only the height of the effector shall be controlled (n = 1). Therefore the example shows a redundant kinematic structure.

**Glossary**

Joint angles

A vector of angles that can be applied on robot joints. Denoted as $q \, \varepsilon \, Q \, c \, R^m$ where Q is the set of all possible joint angles and m is the number of joints.

Degrees of freedom

The number of parameters of a system that can be changed independently. In the examples this is the number of joints m.

Effector pose

Some property of the robot that must be controlled, for instance the position or orientation of a robot's hand. Denoted as $x \, E \, X \subset R^n$ where X is the set of all possible poses and n is the dimensionality.

Forward kinematics

A function $f(q) = x$ that maps joint angles onto a resulting effector pose. Given a concrete robot this function is uniquely defined.

Redundancy

Property of a system having more degrees of freedom than necessary to control an effector. If a system is redundant, multiple actions $q)_1 = q_2$ can have the same result $f(q_1) = f(q_2) = x$.

Inconsistency

Two examples of joint angles and resulting effector pose are inconsistent, if the pose is identical, but the joint angles are not identical.

Inverse kinematics

An inverse kinematics function is any function $g(x^*) - q$ that computes a value for the joint angles to apply some target position $x^* \in X$. The resulting effector pose x of the joint angles must be identical with the target $x^*$: $f(g(x^*)) = x^*$

**State of the art**

State of the art kinematics learning methods split into two groups: error-based and example-based methods.

### Error-based learning

Error-based methods also follow the learning by doing approach. An estimate $g(x^*)$ of the inverse kinematics is used for trying to reach for a target position $x^*$. Using the joint angles $q = g(x^*)$ suggested by the inverse estimate, the resulting position of the effector is evaluated with the forward kinematics function $x = f(q)$. During the learning process the resulting position $x$ will generally differ from the target position $x^*$. Error-based approaches then aim at an optimization of the inverse estimate at the target position $* x^*$.

### Motor error

One group of mechanisms is based on the "motor error". The motor error is a correction $\Delta q$ of the joint angles that is added to the estimated joint angles in order to improve the performance. If such a value is available, it can directly be used to improve the inverse estimate. In Feedback-error learning [2, 3] it is simply assumed that a mechanism to compute that motor error is already available. Therefore a feedback controller is needed (which has to be designed and programmed) that could already solve the entire control of the robot. Such modeling is not necessary with the present invention.

In learning with distal teacher [4, 5] a forward model $f(q)$ must be learned in parallel to the inverse estimate. A motor error can be derived analytically by differentiating the forward model. However such differentiation is in general not trivial and highly dependent on the kind of function approximation model. The invention neither needs an own estimate of the forward kinematics nor any mechanism specific to the machine learning technique. The group of motor error based techniques can deal with redundant kinematic systems.

### Task-error

A special case of error-based learning has been developed in [6, 7]. Here the error in the effector space $x - x^*$ is used directly for learning. The idea is to correct mistakes a priori by shifting the target positions. For instance if the inverse estimate always results in an effector configuration that is 5cm above the target, a model is learned that aims at a position 5cm below the actual target such that the offsets compensate. This approach requires a "good enough" inverse estimate in advance, which is not necessary for the invention. It only works for cases with discrete redundancies ($n = m$), but not for more redundancies ($n < m$).

### Example-based learning

Example-based methods use example configurations $(x, q) = (f(q), q)$ for the training of an inverse estimate $g(x)$. This kind of learning has also been named *Direct inverse learning.* The existing approaches differ in the way how such examples are generated.

### Motor Babbling

Motor babbling [8] is a pure random form of exploration. Joint angles are randomly chosen from the set of all possible configurations $q_i \in Q \subset R^m$. Generally such exploration prohibits inverse kinematics learning for redundant systems due to the non-convexity problem [4]. As already shown in Fig. 1, the sets of correct joint configurations for a desired effector pose are usually not convex, which prohibits averaging.

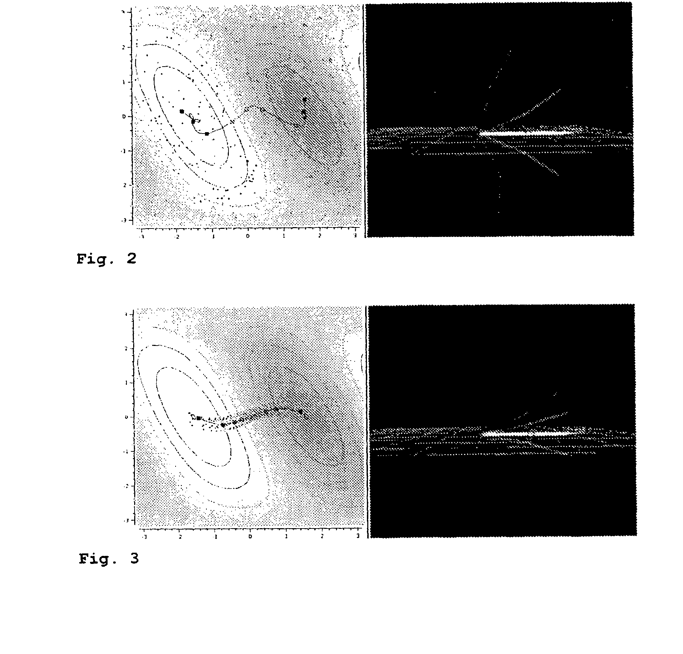

An outcome of motor-babbling for inverse kinematics learning is shown in Fig. 2. For discrete redundancies ($n = m$) where fixed number of solutions occurs, a method has been described to find sets of consistent solutions [9]. That method requires a very dense sampling of the joint space.

### Goal-directed exploration

In goal-directed exploration approaches, the inverse estimate $g(x^*)$ is used for trying to reach for a target position $x^*$. Using the joint angles $q = g(x^*)$ suggested by the inverse estimate, the resulting position of the effector is evaluated with the forward kinematics function $x = f(q)$. Samples $(x_i, q_i)$ are generated for several target positions $x_i^*$, the inverse estimate is updated with those samples and the process is repeated. In this procedure, the inverse model is improved at the observed position $x$ where a correct value for the joint values $q$ exists. In contrast, error-based techniques aim at an improvement of the inverse estimate at the target position $x^*$.

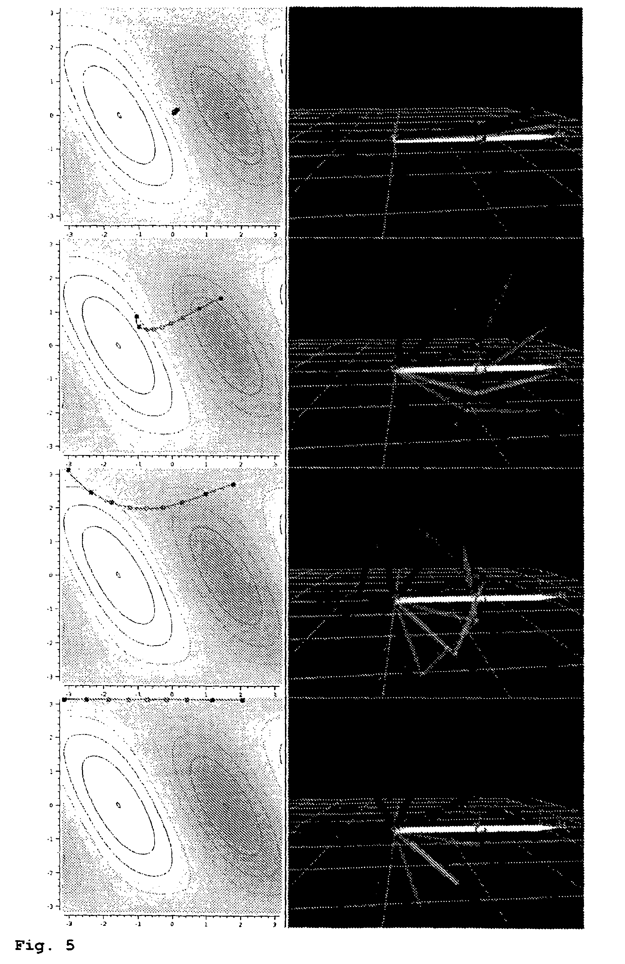

It was shown that such exploration and learning processes can be successful for discrete redundancies ($n = m$) if a "good enough" initial estimate is available [10]. It has been claimed that it could also work for $n < m$ [11] if the target positions are chosen dynamically, but no algorithm has been demonstrated or published. The basic setup is resembled in Fig. 5, showing that inverse estimates are unstable for redundant systems and that (at least in many cases) no correct solution can be found. The claim for this method to work for redundant systems is highly implausible.

In general no success can be guaranteed even if the system contains no redundancies at all [12]. As the entire exploration depends on the inverse estimate, the success highly depends on the extrapolation capabilities of the used function approximation method.

Expert generated examples

Direct learning of inverse kinematics has been shown to be successful if training data $(x_i, q_i)$ without inconsistent solutions is already available [13]. However, this requires an expert to generate such training data that has already solved the problem to control the robot. Such expert knowledge is not necessary for the invention.

The target of the invention is to learn an inverse kinematics mapping $g(x^*)$, that produces joint angles for a desired effector pose. The learning is based on example joint angles q.

The outcome is an effector pose x that can be either observed on the physical robot or calculated with the forward kinematics.

Examples (x, q) can then be used by machine learning algorithms in order to approximate a mapping $g(x^*)$. An essential problem in this kind of learning is the multiple solutions that occur for redundant kinematic structures (see Fig. 1). Machine learning algorithms typically approximate the average output, if multiple target values are specified for the same input. In the case of inverse kinematics this leads to an invalid solution (see Fig. 1, bottom).

In the example of Fig. 1, an inverse kinematics function must suggest one value of joint angles $q \in R^2$ for each desired effector height $x \in R^1$. Such an estimate can be visualized by a one dimensional manifold (a curved line) through the joint space.

Figures 2 and 3 show two examples. For some target heights x, the joint angle estimates are shown by markers on the manifold (the joint angles are furthermore visualized by corresponding postures in the 3D simulation). If the estimate is correct, each marker must be positioned on a contour through the joint space that represents the set of joint angles that do indeed realize the desired effector height. Thus a good inverse estimate positions all markers on the respective contours.

Due to the nature of redundant systems multiple correct solutions exist, it is an object of the invention to find one correct inverse kinematics solution. It is also an object of the invention to find a very efficient inverse kinematics solution.

**Summary of the invention**

This object is achieved by a method and a system according to the independent claims. Advantageous embodiments are defined in the dependent claims.

The invention provides method for learning an inverse kinematics mapping of a robotic effector with redundant control and given forward kinematic function, the inverse kinematics mapping producing joint configurations, e.g. angles, of a robot's effector in order to control a given pose of the robot's effector, the method comprising the following steps: providing a parameterized initial estimate of the inverse kinematics mapping, generating a variation of the estimate of the inverse kinematics mapping, applying the variation of the estimate of the inverse kinematics mapping on a plurality of target positions of the effector in order to generate a plurality of example joint configurations, assigning weights to each of the example joint configuration, the weights representing a degree of inconsistency of a example joint configuration in view of the associated target position, training the estimate of the inverse kinematics mapping with the weighted data of the example joint configurations, and repeating steps b.) to e.) until a termination criterion is met.

The inverse estimate may be initialized in a region of a joint space.

The example joint configurations can be located around the inverse estimate.

An approximation model may be used to represent the inverse estimate.

At least one variation can be explored and the model may be expanded.

The model expansion may follow a direction by selecting the highest weighted examples among the variations.

The expansion can be limited by an expansion criterion indicating that further expansion introduces inconsistencies.

The model may get more accurate in reaching for extreme positions.

In another aspect, the invention provides a method for aligning an effector of a robot with a target object, comprising obtaining a location of the target object using an sensing means, generating a number of example joint configuration sets using an inverse kinematic function variation and a forward kinematic function by use of a processing means, analyzing the example joint configuration sets to resolve inconsistencies by use of the processing means, assigning to each example joint configuration set a weight by use of the processing means, learning on the generated example joint configuration sets by updating the weights by use of the processing means, determine a set of possible solutions for moving the actor towards the location of the target object by use of the processing means, selecting a specific solution from the set of possible solutions by use of the processing means, and moving the effector towards the target object location according to the selected solution.

The parameters of the inverse estimate can be updated through a reward weighted regression.

The learning input is mainly dominated by the configuration with the highest weights.

An inverse kinematic function can be evaluated using the location of the target object, wherein a disturbance term is added to the inverse kinematic function to form the inverse kinematic function variation representing a joint angle configuration, and wherein the forward kinematic function may be obtained using the inverse kinematic function variation representing an effector pose.

The example configuration sets can be inconsistent when the effector pose of an example configuration set is identical to the effector pose of another example configuration set, while the joint angle configuration of the example configuration sets is different.

The inverse kinematic function may be parameterized with a set of parameters.

The parameters for the inverse kinematic functions can be updated in the learning process.

The method of any one of the preceding claims, wherein an inverse estimate may be created for the inverse kinematic function and/or wherein the training can generate training data for a number of inverse kinematic function variations and/or wherein the training data may be weighted and/or wherein the inverse estimate can be updated with the data generated for all inverse kinematic function variations and/or wherein the training may be repeated until the inverse estimate meets a criterion for accuracy.

The sensing means for accepting an input pattern may be at least one of a sensor, a hardware interface and a software interface.

A processing means can be used for generating, analyzing, learning, determining and selecting. The processing means can be a processor and/or a signal processing unit formed of hardware and/or software.

The processing means may be adapted for parallel processing.

In yet another aspect, the invention provides a computer program product, executing the method according when run on a computing unit.

Further, the invention provides a robot system comprising an sensing means obtaining a target object location, a processing means employed for generating a number of example configuration sets using an inverse kinematic function variation and a forward kinematic function, analyzing the example configuration sets to resolve inconsistencies, assigning to each example configuration set a weight, learning on the generated example configuration sets by updating the weights, and determine a set of possible solutions for moving the actor towards the location of the target object, selecting a specific solution from the set of possible solutions, and an effector movably attached to the robot system, wherein the processing means provides information for moving the effector towards the target object location according to the selected solution.

**Brief description of the figures**

Fig. 1    shows a robot arm with two joints. The left side shows the joint space. The bottom axis encodes the angle of the first joint between $-\Pi$ and $+\Pi$ radiant and the side axis encodes the angle of the second joint with the same range. Multiple configurations can be used to apply the same height of the end effector (first three images). The sets of joint angles that apply the same height are marked by contours in the joint space. The last image shows an average of the joint values.

Fig.2    illustrates that direct inverse learning with random motor babbling as exploration process does not yield a correct inverse estimate because of the non-convex redundancy manifolds. The small crosses show the position of the example configurations used for learning.

Fig.3    shows the proposed exploration, analysis and learning process yields an inverse estimate with high accuracy. The solution is moreover efficient, as it follows the locally steepest movement direction. Thus it produces the desired effector movement with minimum joint movement and thus effort.

Fig. 4    provides an overview of the steps involved in the invention. The method starts with an initial inverse estimate. For a number of variations, training data is generated and weighted. The inverse estimate is updated with the joined data from all variations.

Fig. 5    illustrates a plain goal-directed learning of inverse kinematics. Example data is only generated with the inverse estimate. Therefore all example points are located on the controller manifold. This process does not find a solution. In particular the inverse estimate drifts along its orthogonal direction, where no examples are available.

Fig. 6  shows variations of the inverse estimate are used for example generation, but no inconsistency resolution is applied. The process has an increased stability in the orthogonal direction and initially not reachable targets (in particular in the lower left side of the plot) can be reached. However, the inconsistencies shown in the third image (the controller manifold crosses the same redundancy manifolds twice) are destructive and cause a failure of learning in that region.

Fig. 7  shows on the left: Space of targets positions $x^*$. A linear target motion (bold line) shall be produced between two target points. Right: Space of results $x = f(g(x^*))$. An inconsistency occurs e.g. when the grid is folded. The formerly straight line now has a circular shape.

Fig. 8  shows inverse kinematics learning according to the invention. The images show successive stages of the learning process. The inverse estimate is initialized around a small point in space. It spreads successively and ends up with an accurate solution.

Fig. 9  shows robots with redundant kinematic structures include the humanoid robots Asimo (left) and iCub (right), but also single robot arms such as the Kuka LWR arm (bottom).

## Detailed description of embodiments of the invention

According to one aspect, the invention proposes a process for the generation and analysis of example joint configurations such that destructive averaging does not occur. The invention allows finding an inverse kinematics function of a redundant system without any prior knowledge or modeling effort. The only necessity is that the outcome x of a joint configuration q can be evaluated. The method is independent from the kind of function approximation mechanism that is used to represent the inverse estimate. For instance linear regression models can be used.

The invention follows the idea of "learning by doing" or rather "exploration by trying to do": examples are generated by trying to reach for target positions. An analysis scheme is introduced for the detection of inconsistent solutions.

Exploration, analysis and learning are iteratively repeated. Thereby an inverse kinematics solution is found. Due to the nature of redundant systems multiple correct solutions exist. The invention allows not only finding one correct solution, but also a very efficient one.

Efficient means that a desired motion of the effector can be realized with a minimum on joint motion and thus effort. In Fig. 3 this property can be seen as the manifold of the inverse estimate (black line) crosses the redundancy manifolds nearly orthogonal.

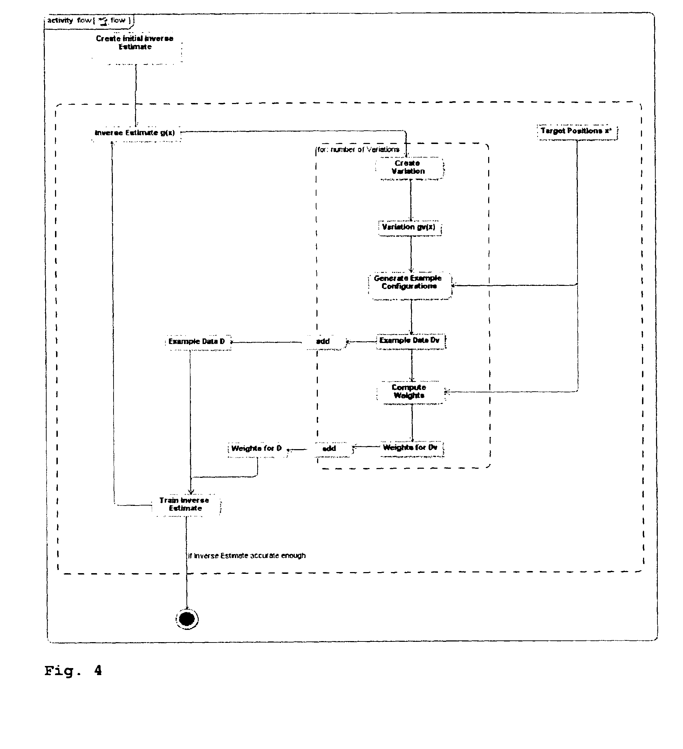

The invention is related to the goal-directed direct inverse learning [10, 11, 12]. Given to the algorithm is a forward kinematics function $f(q) = x$, where q are joint angles in $Q \subset R^m$ and x is the effector configuration in $X \subset R^n$. The goal is to learn an inverse kinematics function $g(x) = q$ such that $f(g(x)) = x$. For learning the function is parameterized with a set of parameters $\theta$ (such that $g(x) = g(x, \theta)$ ) that are adapted during learning. An overview of a method according to the invention is shown in Fig. 4. There are three essential sub-steps:

1. A set of example configurations $D^v$ is generated for a variation $g^v(x)$ of the inverse estimate $g(x)$. The use of such variations is a novelty compared to other approaches.

2. The set of examples $D^v$ is analyzed and weights are assigned for each sample. This weighting resolves inconsistencies.

3. The inverse estimate is trained with the data from multiple variations. Contrary to other approaches not all example configurations are considered equally, but accordingly to the weights introduced in the analysis step. These steps are explained in detail in the next three sections.

## Sample generation

The first step is the generation of samples $(f(q), q)$. Initially a sequence of target motions is chosen: $x \in X$, t= 1...T, where T is the number of target positions. Generally in goal-directed approaches [10, 11, 12], the inverse estimate is then used for trying to reach for those targets: $q_t = g(\boldsymbol{x_i^*})$, $X_t = f(q_t)$. The invention uses variations of $g(x)$ by adding a small disturbance term $E(x)$ to the function:

$$g^v(x) = g(x) + E^v(x). \qquad (1)$$

Examples are then generated with that variation: $q_t^v$ $g^v(x_t^*)$, $x_t^v = f(q_t^v)$. The set of examples generated for a variation v is denoted as

$$D^v = \{(f(g^v(x_t^*)), g^v(x_t^*))\}_t \qquad (2)$$

Sample analysis

The second step is the analysis of the generated samples $D^V$ in order to resolve inconsistencies. Two samples $(x_1, q_1)$ and $(x_2, q_2)$ are inconsistent, if they represent the same effector configuration $x_1 = x_2$ but different joint angles q) $1 \neq q_2$.

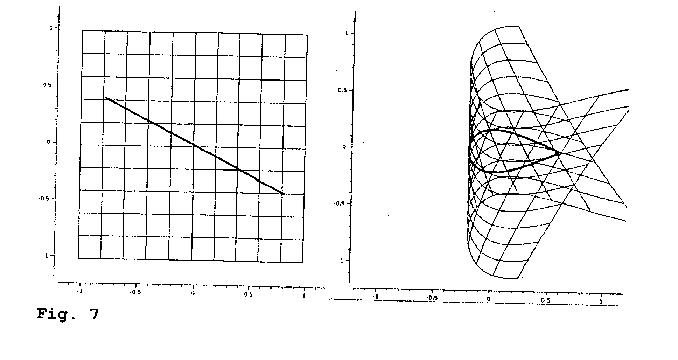

In such cases function approximation algorithms typically average the output to a value $\bar{q}$, which results in an wrong effector configuration $f(\bar{q}) \neq X_1[4]$. As the data is generated with a function $g^v(x)$, two inconsistent samples must have been generated by two different target positions $x_1^* \neq x_2^*$. If a straight line is drawn between $x_1^*$ and $x_2^*$ as target motion (see Fig. 7, left), it becomes clear that two cases can occur for inconsistencies:

1. An effector motion occurs while using the inverse estimate $g^v(x^*)$ to follow a linear target motion between $x_1^{\cdot}$ and $x_2^{\cdot}$. Since the effector returns (by definition of an inconsistency) to the same point, the observed effector movement must result in a closed (e.g. circular) shape (see Fig. 7, right). Another description is that the resulting direction of effector motion changes by 180 degree while the desired direction does not change. Since the effector is initially moved away from $X_1$, it must make such a turn to end up at the same position.

2. There is no effector motion. This case is characterized by a minimum of movement efficiency. While the joints are moved (by definition), the effect on the effector is zero.

Now inconsistencies can be resolved by any criteria that exclude (i) changes of the observed direction of effector motion that are not congruent with the desired direction and (ii) movements with low efficiency.

In a general notion a weight $w_t^v \in \mathbb{R}$ is assigned to each sample $(x_t^{\cdot}, q_t^{\cdot})$. The first case of an inconsistency (circular resulting motion) can for instance be resolved by the following weighting scheme:

$$w_t^{v^{dir}} = \frac{1}{2}\left(1 + cos\sphericalangle(x_t^* - x_{t-1}^*, x_t^v - x_{t-1}^v)\right) \qquad (3)$$

Thereby $\sphericalangle(x_t^* - x_{t-1}^*, x_t^v - x_{t-1}^v)$ is the angle between the desired and actual movement direction of the effector. If both are identical the angle is 0.0° and the weight becomes $w_t^{v\,dir}$ 1.0. If the observed movement has the exact opposite direction, the angle is 180.0° and the weight becomes $w_t^{v\,dir} = 0.0$. If a circular motion occurs for a linear target motion, one half of the motion receives a higher weight than the one and the inconsistency can be resolved iteratively. If the estimate $g(x^*)$ is rather accurate and the desired movement direction can always be realized, all samples receive full weight 1.0.

The second case of an inconsistency (low efficiency) can be resolved by weighting with the ratio of effector motion and joint motion:

$$w_t^{v^{eff}} = \frac{\|x_t^v - x_{t-1}^v\|}{\|q_t^v - q_{t-1}^v\|} \qquad (4)$$

This weight becomes 0.0 if the joints move without effector motion. Finally both weights can be combined by multiplication:

$$w_t^v = w_t^{v^{dir}} - w_t^{v^{eff}} \qquad (5)$$

The concrete formulas for the weights thereby are only examples. They are formulated directly on timeseries. Similar formulations can be found that operate on the entire space of target positions, for instance based on the grid formulation (Fig. 7).

Learning

The learning on generated examples is the third principle step. Example data (and corresponding weights) from multiple different variations $gV(x^*)$ ; $v = 1...V$ is combined, where $V \in N$ is the number of different variations. The complete set of examples is then

$$D = \bigcup_v D^v = \bigcup_v \{ ( f(g^v(x_t^*)),\ g^v(x_t^*) ) \}_t. \qquad (6)$$

In the learning step the parameters $\theta$ of the inverse estimate $g(x, \theta)$ are updated with the generated samples $(x_t^v,\ q_t^v)$ and weights $w_t^v$ in a reward weighted regression manner. Thereby the numerical error

$$E = \sum_v \sum_t w_t^v \cdot (g(x_t^v) - q_t^v)^2 \qquad (7)$$

is minimized. Any regression algorithm can be used for this step (e.g. linear regression).

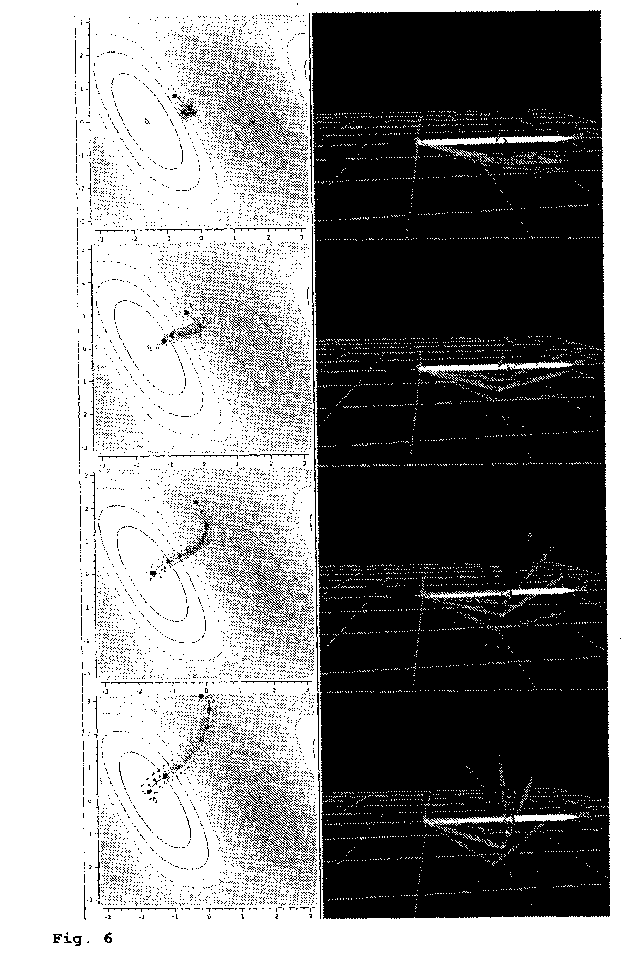

The introduction of multiple variations in the sample generation step locally introduces inconsistent solutions. That is multiple solutions q can exist for the same effector pose x. However, if the disturbance terms $E^v(x)$ output numerically small values, these solutions are located in a small region in the joint space. Therefore the error induced by the non-convexity problem is generally very small. The combination with the weighted learning now allows to "select" among the available solutions. Good solutions in terms of movement efficiency receive a higher weight and will dominate the learning and cause the inverse estimate to be aligned along such optimal joint configurations. The averaging is therefore constructive (compared to the destructive averaging in "motor babbling") which is only possible due to the combination of variation and weighting. Without variations there is no systematic exploration and the process is unstable (Fig. 5). With variations, but without inconsistency resolution the process can still be blocked by inconsistent samples (Fig. 6).

Example

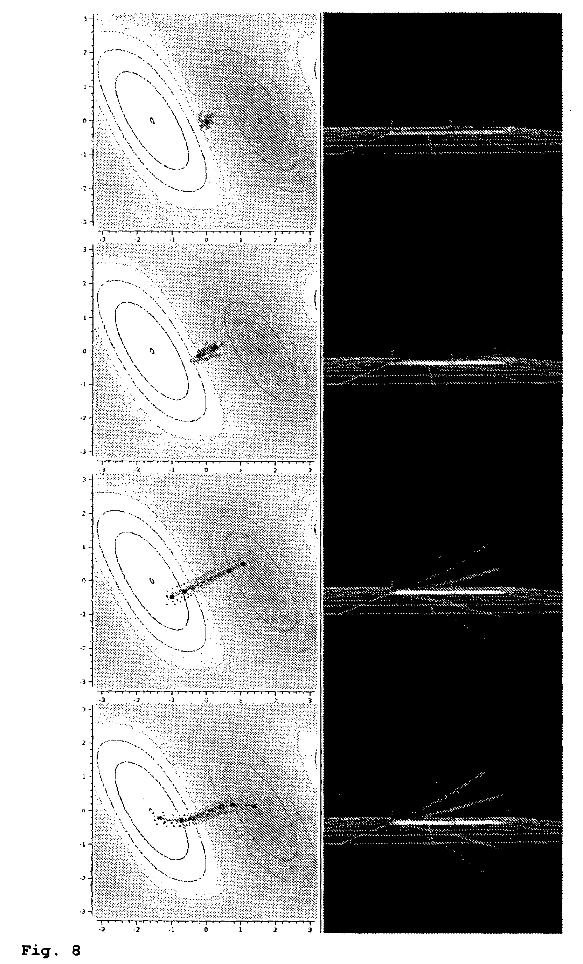

An example of inverse kinematics learning according to the invention is shown in Fig. 8. The inverse estimate is initialized in a small region in the joint space (first image). The next images show the progress of the method after several iterations of exploration, analysis and learning. For each stage in that progress, the current inverse estimate is shown together with the currently generated example data.

Triggered by the exploration of variations, the model rapidly starts to expand. The plots do not show the variations themselves, but the examples $D^v$ (see Eq. (2)) generated from them. These examples are located around the inverse estimate. The structure of the variations is, however, still visible. For instance in the second image, the generated examples follow multiple lines through the joint space, which are the variation of the inverse estimate.

Due to the efficiency weighting (Equation (4)), the expansion directly follows the steepest, most efficient direction. This is possible since the learning "selects" the highest weighted examples among the variations.

In the third image the expansion reaches the ridge of the forward kinematics. A further expansion would introduce inconsistencies, but which is prevented by the movement direction criterion (Eq. (3)). In the further progress the model gets a non linear shape while getting more accurate in reaching for the extreme positions.

It should be understood that the foregoing relates only to embodiments of the invention and that numerous changes and modifications made therein may be made without departing from the scope of the invention as set forth in the following claims.

**References**

[1] M. Gienger, H. Janssen, and C. Goerick, "Task-oriented whole body motion for humanoid robots", in Proceedings of the IEEE-RAS/RSJ International Conference on Humanoid Robots, 12 2005.

[2] M. Kawato, "Feedback-error-learning neural network for supervised motor learning", in Advanced Neural Computers, R. Eckmiller, Ed. Elsevier, 1990.

[3] D. Wolpert and M. Kawato, "Multiple paired forward and inverse models for motor control", Neural Networks, pp. 1317-1329, 1998.

[4] M. Jordan and D. Rumelhart, "Forward models: supervised learning with distal teacher", Cognitive Science, vol. 16, pp. 307-354, 1992.

[5] M. I. Jordan, "Computational aspects of motor control and motor learning", in Handbook of Perception and Action: Motor Skills. Academic Press, 1996.

[6] J. Porrill, P. Dean, and J. V. Stone, "Recurrent cerebellar architecture solves the motor-error problem", Proc Biol Sci, vol. 271, no. 1541, pp. 789-796, 2004.

[7] J. Porrill and P. Dean, "Recurrent cerebellar loops simplify adaptive control of redundant and nonlinear motor systems", Neural Computation, vol. 19, no. 1, pp.

[8] Y. Demiris and A. Dearden, "From motor babbling to hierarchical learning by imitation: A robot developmental pathway", in Proceedings of the fifth international workshop on epigenetic robots (EPIROB): modeling cognitive development in robotic systems, 2005, pp. 31-37.

[9] D. Demers and K. Kreutz-Delgado, "Learning global direct inverse kinematics", in Advances in Neural Information Processing Systems, 1992.

[10] E. Oyama and T. M. S. Tachi, "Goal-directed property of on-line direct inverse modeling", in IEEE Int. Jnt. Conf. on Neural Networks, 2000.

[11] S. Colombano, M. Compton, and M. Bualat, "Goal directed model inversion", in IEEE Int. Jnt. Conf. on Neural Networks, 1991.

[12] T. D. Sanger, "Failure of motor learning for large initial errors", Neural Computation, vol. 16, no. 9, pp. 1873-1886, 2004.

[13] M. Rolf, J. J. Steil, and M. Gienger, "Efficient exploration and learning of full body kinematics", in 8th IEEE International Conference on Development and Learning (ICDL09), 2009.

**Claims**

**1.** A method for learning an inverse kinematics mapping of a robotic effector with redundant control and given forward dynamic function, the inverse kinematics mapping producing joint configurations, e.g. angles, of a robot's effector in order to control a given pose of the robot's effector, the method comprising the following steps:

a.) providing a parameterized initial estimate of the inverse kinematics mapping,
b.) generating a variation of the estimate of the inverse kinematics mapping,
c.) applying the variation of the estimate of the inverse kinematics mapping on a plurality of target positions of the effector in order to generate a plurality of example joint configurations,
d.) assigning weights to each of the example joint configuration, the weights representing a degree of inconsistency of a example joint configuration in view of the associated target position,
e.) training the estimate of the inverse kinematics mapping with the weighted data of the example joint configurations, and
f.) repeating steps b.) to e.) until a termination criterion is met.

2. The method of claim 1, wherein the inverse estimate is initialized in a region of a joint space.

3. The method of claim 1 or 2, wherein the example joint configurations are located around the inverse estimate.

4. The method of any one of the preceding claims, wherein an approximation model is used to represent the inverse estimate.

5. The method of claim 4, wherein at least one variation is explored and wherein the model is expanded.

6. The method of claim 4 or 5, wherein the model expansion follows a direction by selecting the highest weighted examples among the variations.

7. The method of any one of claims 4-6, wherein the expansion is limited by an expansion criterion indicating that further expansion introduces inconsistencies.

8. The method of any one of claims 4-7, wherein the model gets more accurate in reaching for extreme positions.

9. A method for controlling an effector of a robot, e.g. for aligning an effector of a robot with a target object, comprising:

- obtaining a location of the target object using an sensing means,
- generating a number of example joint configuration sets of the effector using an inverse kinematic function variation and a forward kinematic function,
- analyzing the example joint configuration sets to resolve inconsistencies,
- assigning to each example joint configuration set a weight, the weights representing a degree of inconsistency of an example joint configuration in view of the associated target object location,
- learning the inverse kinematics function on the generated example configuration sets by considering the weights,
- determining a set of possible solutions for moving the effector towards the location of the target object,
- selecting a specific solution from the set of possible solutions, and
- moving the effector towards the target object location according to the selected solution.

10. The method of claim 9, wherein the inverse kinematic function is updated through a reward weighted regression.

11. The method of claim 9 or 10, wherein a highest weighted example joint configuration set among the example joint configuration sets is selected.

12. The method of any one of the claims 9-11,

- wherein an inverse kinematic function is evaluated using the location of the target object,
- wherein a disturbance term is added to the inverse kinematic function to form the inverse kinematic function variation representing a joint configuration, and
- wherein the forward kinematic function is used to obtain the effector pose corresponding to the (disturbed) joint configuration.

13. The method of any one of the claims 9-12, wherein the example configuration sets are inconsistent when the effector pose of an example configuration set is identical to the effector pose of another example configuration set, while the joint angle configuration of the example configuration sets is different.

14. The method of any one of the claims 9-13, wherein the inverse kinematic function is parameterized with a set of parameters.

15. The method of any one of the claims 9-14, wherein the parameters for the inverse kinematic functions are updated in the learning process.

16. The method of any one of the preceding 9-15, wherein an inverse estimate is created for the inverse kinematic function and/or wherein the training generates training data for a number of inverse kinematic function variations and/or wherein the training data is weighted and/or wherein the inverse estimate is updated with the data generated for all inverse kinematic function variations and/or wherein the training is repeated until the inverse estimate meets a criterion for accuracy.

17. The method of any one of the claims 9-16, wherein the sensing means for accepting an input pattern is at least one of a sensor, a hardware interface and a software interface.

18. The method of any one of the claims 9-17, wherein a processing means is used for generating, analyzing, learning, determining and selecting, and wherein the processing means is a processor and/or a signal processing unit formed of hardware and/or software.

19. The method of any one of the claims 9-18, wherein the processing means is adapted for parallel processing.

20. A computer program product, executing a method according to any of the preceding claims when run on a computing unit.

21. A robot system comprising

    - an sensing means obtaining a target object location,
    - a processing means employed for

        ○ generating a number of example configuration sets using an inverse kinematic function variation and a forward kinematic function,
        ○ analyzing the example configuration sets to resolve inconsistencies,
        ○ assigning to each example configuration set a weight, the weight representing a degree of inconsistency of an example joint configuration in view of the associated target object location
        ○ learning on the generated example configuration sets by updating the inverse estimate,
        ○ determine a set of possible solutions for moving the actor towards the location of the target object, and
        ○ selecting a specific solution from the set of possible solutions, and

    - an effector movably attached to the robot system, wherein the processing means provides information for moving the effector towards the target object location according to the selected solution.

22. The system of claim 21, wherein the inverse estimate is updated through a reward weighted regression.

23. The system of claim 21 or 22, wherein a highest weighted example joint configuration set among the example joint configuration sets is selected.

24. The system of any one of the claims 21-23,

    - wherein an inverse kinematic function is evaluated using the location of the target object,
    - wherein a disturbance term is added to the inverse kinematic function to form the inverse kinematic function variation representing a joint angle configuration, and
    - wherein the forward kinematic function is used to obtain the effector pose corresponding to the (disturbed) joint configuration.

25. The system of any one of the claims 21-24, wherein the example configuration sets are inconsistent when the effector pose of an example configuration set is identical to the effector pose of another example configuration set, while the joint angle configuration of the example configuration sets is different.

26. The system of any one of the claims 21-25, wherein the inverse kinematic function is parameterized with a set of parameters.

27. The system of any one of the claims 21-26, wherein the parameters for the inverse kinematic functions are updated in the learning process.

28. The system of any one of the claims 21-27, wherein an inverse estimate is created for the inverse kinematic function and/or wherein the training generates training data for a number of inverse kinematic function variations and/or wherein the training data is weighted and/or wherein the inverse estimate is updated with the data generated for all inverse kinematic function variations and/or wherein the training is repeated until the inverse estimate meets a criterion for accuracy.

29. The system of any one of the claims 21-28, wherein the sensing means for accepting an input pattern is at least one of a sensor, a hardware interface and a software interface.

30. The system of any one of the claims 21-29, wherein the processing means is a processor and/or a signal processing unit formed of hardware and/or software.

31. The system of any one of the claims 21-30, wherein the processing means is adapted for parallel processing.

**Patentansprüche**

1. Verfahren zum Erlernen eines inversen Kinematik-Mapping eines Robotereffektors mit redundanter Steuerung und vorgegebener dynamischer Vorwärtsfunktion, wobei das inverse Kinematik-Mapping Gelenkkonfigurationen, z.B. Winkel, eines Robotereffektors erzeugt, um eine vorgegebene Pose des Robotereffektors zu steuern, mit den folgenden Schritten:

   a.) Vorsehen einer parametrierten Ausgangsschätzung des inversen Kinematik-Mapping,
   b.) Erzeugen einer Änderung der Schätzung des inversen Kinematik-Mapping,
   c.) Anwenden der Änderung der Schätzung des inversen Kinematik-Mapping auf eine Vielzahl von Zielpositionen des Effektors, um eine Vielzahl von beispielhaften Gelenkkonfigurationen zu erzeugen,
   d.) Zuordnen von Gewichtungen zu der jeweiligen beispielhaften Gelenkkonfiguration, wobei die Gewichtungen einen Grad an Unstimmigkeit einer beispielhaften Gelenkkonfiguration in Anbetracht der zugeordneten Zielposition darstellen,
   e.) Trainieren der Schätzung des inversen Kinematik-Mapping mit den gewichteten Daten der beispielhaften Gelenkkonfigurationen, sowie
   f.) Wiederholen der Schritte b.) bis e.), bis ein Abschlusskriterium erfüllt ist.

2. Verfahren gemäß Anspruch 1, wobei die inverse Kinematik in einem Bereich eines Gelenkraumes initialisiert wird.

3. Verfahren gemäß Anspruch 1 oder 2, wobei die beispielhaften Gelenkkonfigurationen um die inverse Schätzung herum liegen.

4. Verfahren gemäß einem der vorhergehenden Ansprüche, wobei ein Annäherungsmodell zur Darstellung der inversen Schätzung verwendet wird.

5. Verfahren gemäß Anspruch 4, wobei mindestens eine Änderung untersucht wird und wobei das Modell erweitert wird.

6. Verfahren gemäß Anspruch 4 oder 5, wobei die Modellerweiterung einer Richtung folgt, indem die am höchsten gewichteten Beispiele aus den Änderungen ausgewählt werden.

7. Verfahren gemäß einem der Ansprüche 4 bis 6, wobei die Erweiterung durch ein Erweiterungskriterium begrenzt ist, das anzeigt, dass eine weitere Erweiterung Unstimmigkeiten einbringt.

8. Verfahren gemäß einem der Ansprüche 4 bis 7, wobei das Modell beim Greifen nach äußersten Positionen genauer wird.

9. Verfahren zur Steuerung eines Effektors eines Roboters, z.B. zur Ausrichtung eines Effektor eines Roboters mit einem Zielobjekt, mit den Schritten:

- Erhalten eines Ortes des Zielobjektes unter Verwendung einer Erfassungseinrichtung,
- Erzeugen einer Reihe von beispielhaften Gelenkkonfigurationssätzen des Effektors unter Verwendung einer Änderung der inversen Kinematik-Funktion und einer vorwärts gerichteten Kinematik-Funktion,
- Analysieren der beispielhaften Gelenkkonfigurationssätze zur Auflösung von Unstimmigkeiten,
- Zuordnen einer Gewichtung zu jedem beispielhaften Gelenkkonfigurationssatz, wobei die Gewichtungen einen Grad an Unstimmigkeit einer beispielhaften Gelenkkonfiguration in Anbetracht des zugeordneten Zielobjektsortes darstellen,
- Erlernen der inversen Kinematik-Funktion auf den erzeugten beispielhaften Konfigurationssätzen durch Betrachtung der Gewichtungen,
- Festlegen eines Satzes möglicher Lösungen zum Bewegen des Effektors in Richtung des Ortes des Zielobjektes,
- Auswählen einer bestimmten Lösung aus der Reihe möglicher Lösungen, und
- Bewegen des Effektors in Richtung des Zielobjektortes gemäß der ausgewählten Lösung.

10. Verfahren gemäß Anspruch 9, wobei die inverse Kinematik-Funktion durch eine so genannte Reward-Weighted Regression (durch Belohnung gewichtete Regression) aktualisiert wird.

11. Verfahren gemäß Anspruch 9 oder 10, wobei der am höchsten gewichtete, beispielhafte Gelenkkonfigurationssatz aus den beispielhaften Gelenkkonfigurationssätzen ausgewählt wird.

12. Verfahren gemäß einem der Ansprüche 9 bis 11,

- wobei eine inverse Kinematik-Funktion unter Verwendung des Ortes des Zielobjektes ausgewertet wird,
- wobei ein Störbegriff zu der inversen Kinematik-Funktion hinzugefügt wird, um die eine Gelenkkonfiguration darstellende Änderung der inversen Kinematik-Funktion zu bilden, und
- wobei die vorwärts gerichtete kinematische Funktion verwendet wird, um die der (gestörten) Gelenkkonfiguration entsprechende Effektor-Pose zu erhalten.

13. Verfahren gemäß einem der Ansprüche 9 bis 12, wobei die Beispielkonfigurationssätze unstimmig sind, wenn die Effektor-Pose eines Beispielkonfigurationssatzes mit der Effektor-Pose eines weiteren Beispielkonfigurationssatzes identisch ist, während die Gelenkwinkelkonfiguration der Beispielkonfigurationssätze unterschiedlich ist.

14. Verfahren gemäß einem der Ansprüche 9 bis 13, wobei die inverse Kinematik-Funktion mit einem Parametersatz parametriert wird.

15. Verfahren gemäß einem der Ansprüche 9 bis 14, wobei die Parameter für die inversen Kinematik-Funktionen in dem Lernprozess aktualisiert werden.

16. Verfahren gemäß einem der vorhergehenden Ansprüche 9 bis 15, wobei eine inverse Schätzung für die inverse Kinematik-Funktion erzeugt wird und/oder wobei das Training Trainingsdaten für eine Reihe von Änderungen der inversen Kinematik-Funktion erzeugt und/oder wobei die Trainingsdaten gewichtet werden und/oder wobei die inverse Schätzung mit den für alle Änderungen der inversen Kinematik-Funktion erzeugten Daten aktualisiert wird und/oder wobei das Training solange wiederholt wird, bis die inverse Schätzung ein Genauigkeitskriterium erfüllt.

17. Verfahren gemäß einem der Ansprüche 9 bis 16, wobei die Erfassungseinrichtung zum Annehmen eines Eingabemusters aus mindestens entweder einem Sensor, einer Hardware-Schnittstelle oder einer Software-Schnittstelle besteht.

18. Verfahren gemäß einem der Ansprüche 9 bis 17, wobei eine Verarbeitungseinrichtung zum Erzeugen, Analysieren, Erlernen, Festlegen und Auswählen eingesetzt wird und wobei die Verarbeitungseinrichtung einen Prozessor und/oder eine aus Hardware und/oder Software bestehende Signalverarbeitungseinheit darstellt.

19. Verfahren gemäß einem der Ansprüche 9 bis 18, wobei die Verarbeitungseinrichtung zur Parallelverarbeitung geeignet ist.

20. Computerprogrammprodukt, das ein Verfahren gemäß einem der vorhergehenden Ansprüche ausführt, wenn es auf einer Computereinheit läuft.

21. Robotersystem mit

- einer Erfassungseinrichtung, die einen Zielobjektort erhält,
- einer Verarbeitungseinrichtung, welche eingesetzt wird zum

○ Erzeugen einer Reihe von Beispielkonfigurationssätzen unter Verwendung einer Änderung der inversen Kinematik-Funktion und einer vorwärts gerichteten Kinematik-Funktion,
○ Analysieren der Beispielkonfigurationssätze zur Auflösung von Unstimmigkeiten,
○ Zuordnen einer Gewichtung zu jedem Beispielkonfigurationssatz, wobei die Gewichtungen einen Grad an Unstimmigkeit einer beispielhaften Gelenkkonfiguration in Anbetracht des zugeordneten Zielobjektortes darstellen,
o Lernen an den erzeugten Beispielkonfigurationssätzen durch Aktualisieren der inversen Schätzung,
o Festlegen eines Satzes möglicher Lösungen zum Bewegen des Aktors in Richtung des Ortes des Zielobjektes, und
o Auswählen einer bestimmten Lösung aus dem Satz möglicher Lösungen, sowie

- einem beweglich an dem Robotersystem angebrachten Effektor, wobei die Verarbeitungseinrichtung Informationen zum Bewegen des Effektors in Richtung des Zielobjektortes gemäß der ausgewählten Lösung liefert.

22. System gemäß Anspruch 21, wobei die inverse Schätzung durch eine Reward-Weighted Regression aktualisiert wird.

23. System gemäß Anspruch 21 oder 22, wobei ein am höchsten gewichteter beispielhafter Gelenkkonfigurationssatz aus den beispielhaften Gelenkkonfigurationssätzen ausgewählt wird.

24. System gemäß einem der Ansprüche 21 bis 23,

- wobei eine inverse Kinematik-Funktion unter Verwendung des Ortes des Zielobjektes ausgewertet wird,
- wobei ein Störbegriff zu der inversen Kinematik-Funktion hinzugefügt wird, um die Änderung der inversen Kinematik-Funktion zu bilden, die eine Gelenkwinkelkonfiguration darstellt, und
- wobei die vorwärts gerichtete Kinematik-Funktion eingesetzt wird, um die Effektor-Pose entsprechend der (gestörten) Gelenkkonfiguration zu erhalten.

25. System gemäß einem der Ansprüche 21 bis 24, wobei die Beispielkonfigurationssätze unstimmig sind, wenn die Effektor-Pose eines Beispielkonfigurationssatzes mit der Effektor-Pose eines anderen Beispielkonfigurationssatzes identisch ist, während die Gelenkwinkelkonfiguration der Beispielkonfigurationssätze unterschiedlich ist.

26. System gemäß einem der Ansprüche 21 bis 25, wobei die inverse Kinematik-Funktion mit einem Parametersatz parametriert wird.

27. System gemäß einem der Ansprüche 21 bis 26, wobei die Parameter für die inversen Kinematik-Funktionen in dem Lernprozess aktualisiert werden.

28. System gemäß einem der Ansprüche 21 bis 27, wobei eine inverse Schätzung für die inverse Kinematik-Funktion erzeugt wird und/oder wobei das Training Trainingsdaten für eine Reihe von Änderungen der inversen Kinematik-Funktion erzeugt und/oder wobei die Trainingsdaten gewichtet werden und/oder wobei die inverse Schätzung mit den für alle Änderungen der inversen Kinematik-Funktion erzeugten Daten aktualisiert wird und/oder wobei das Training solange wiederholt wird, bis die inverse Schätzung ein Genauigkeitskriterium erfüllt.

29. System gemäß einem der Ansprüche 21 bis 28, wobei die Erfassungseinrichtung zum Annehmen eines Eingabemusters mindestens entweder ein Sensor, eine Hardware-Schnittstelle oder eine Software-Schnittstelle ist.

30. System gemäß einem der Ansprüche 21 bis 29, wobei die Verarbeitungseinrichtung ein Prozessor und/oder eine aus Hardware und/oder Software bestehende Signalverarbeitungseinheit ist.

**31.** System gemäß einem der Ansprüche 21 bis 30, wobei die Verarbeitungseinrichtung zur Parallelverarbeitung geeignet ist.

**Revendications**

**1.** Procédé pour l'apprentissage d'un mappage de cinématique inverse d'un effecteur robotique avec commande redondante et fonction dynamique directe donnée, le mappage de cinématique inverse produisant des configurations d'articulation, par ex. des angles, de l'effecteur d'un robot afin de commander une pose donnée de l'effecteur du robot, le procédé comprenant les étapes suivantes :

a.) la fourniture d'une estimation initiale paramétrée du mappage de cinématique inverse,
b.) la génération d'une variation de l'estimation du mappage de cinématique inverse,
c.) l'application de la variation de l'estimation du mappage de cinématique inverse sur une pluralité de positions cibles de l'effecteur afin de générer une pluralité de configurations d'articulation d'exemple,
d.) l'affectation de poids à chaque configuration d'articulation d'exemple, les poids représentant un degré d'incohérence d'une configuration d'articulation d'exemple étant donné la position cible associée,
e.) l'apprentissage de l'estimation du mappage de cinématique inverse avec les données pondérées des configurations d'articulation d'exemple, et
f.) la répétition des étapes b.) à e.) jusqu'à ce qu'un critère de terminaison soit satisfait.

**2.** Procédé selon la revendication 1, dans lequel l'estimation inverse est initialisée dans une région d'un espace d'articulation.

**3.** Procédé selon la revendication 1 ou 2, dans lequel les configurations d'articulation d'exemple sont situées autour de l'estimation inverse.

**4.** Procédé selon l'une quelconque des revendications précédentes, dans lequel un modèle d'approximation est utilisé pour représenter l'estimation inverse.

**5.** Procédé selon la revendication 4, dans lequel au moins une variation est explorée et dans lequel le modèle fait l'objet d'une expansion.

**6.** Procédé selon la revendication 4 ou 5, dans lequel l'expansion du modèle suit une direction en sélectionnant les exemples pondérés les plus élevés parmi les variations.

**7.** Procédé selon l'une quelconque des revendications 4 à 6, dans lequel l'expansion est limitée par un critère d'expansion indiquant qu'une expansion supplémentaire introduit des incohérences.

**8.** Procédé selon l'une quelconque des revendications 4 à 7, dans lequel le modèle devient plus précis en atteignant des positions extrêmes.

**9.** Procédé pour commander un effecteur d'un robot, par ex. pour aligner un effecteur d'un robot avec un objet cible, comprenant :

- l'obtention d'un emplacement de l'objet cible en utilisant un moyen de détection,
- la génération d'un certain nombre d'ensembles de configurations d'articulation d'exemple de l'effecteur en utilisant une variation de fonction cinématique inverse et une fonction cinématique directe,
- l'analyse des ensembles de configurations d'articulation d'exemple pour résoudre les incohérences,
- l'affectation à chaque ensemble de configurations d'articulation d'exemple d'un poids, les poids représentant un degré d'incohérence d'une configuration d'articulation d'exemple étant donné l'emplacement de l'objet cible associé,
- l'apprentissage de la fonction de cinématique inverse sur les ensembles de configurations d'exemple générés en considérant les poids,
- la détermination d'un ensemble de solutions possibles pour déplacer l'effecteur vers l'emplacement de l'objet cible,

- la sélection d'une solution spécifique parmi l'ensemble de solutions possibles, et
- le déplacement de l'effecteur vers l'emplacement de l'objet cible selon la solution sélectionnée.

10. Procédé selon la revendication 9, dans lequel la fonction cinématique inverse est mise à jour par le biais d'une régression pondérée de récompense.

11. Procédé selon la revendication 9 ou 10, dans lequel un ensemble de configurations d'articulation d'exemple pondéré le plus élevé parmi les ensembles de configurations d'articulation d'exemple est sélectionné.

12. Procédé selon l'une quelconque des revendications 9 à 11,

- dans lequel une fonction cinématique inverse est évaluée en utilisant l'emplacement de l'objet cible,
- dans lequel un terme de perturbation est ajouté à la fonction cinématique inverse pour former la variation de fonction cinématique inverse représentant une configuration d'articulation, et
- dans lequel la fonction cinématique directe est utilisée pour obtenir la pose d'effecteur correspondant à la configuration d'articulation (perturbée).

13. Procédé selon l'une quelconque des revendications 9 à 12, dans lequel les ensembles de configurations d'exemple sont incompatibles lorsque la pose d'effecteur d'un ensemble de configurations d'exemple est identique à la pose d'effecteur d'un autre ensemble de configurations d'exemple, alors que la configuration d'angle d'articulation des ensembles de configurations d'exemple est différente.

14. Procédé selon l'une quelconque des revendications 9 à 13, dans lequel la fonction cinématique inverse est paramétrée avec un ensemble de paramètres.

15. Procédé selon l'une quelconque des revendications 9 à 14, dans lequel les paramètres pour les fonctions cinématiques inverses sont mis à jour dans le processus d'apprentissage.

16. Procédé selon l'une quelconque des revendications 9 à 15 précédentes, dans lequel une estimation inverse est créée pour la fonction cinématique inverse et/ou dans lequel l'apprentissage génère des données d'apprentissage pour un certain nombre de variations de fonction cinématique inverse et/ou dans lequel les données d'apprentissage sont pondérées et/ou dans lequel l'estimation inverse est mise à jour avec les données générées pour toutes les variations de fonction cinématique inverse et/ou dans lequel l'apprentissage est répété jusqu'à ce que l'estimation inverse satisfasse à un critère de précision.

17. Procédé selon l'une quelconque des revendications 9 à 16, dans lequel le moyen de détection pour accepter un motif d'entrée est au moins un parmi un capteur, une interface matérielle et une interface logicielle.

18. Procédé selon l'une quelconque des revendications 9 à 17, dans lequel un moyen de traitement est utilisé pour la génération, l'analyse, l'apprentissage, la détermination et la sélection, et dans lequel le moyen de traitement est un processeur et/ou une unité de traitement de signal formé de matériel et/ou de logiciel.

19. Procédé selon l'une quelconque des revendications 9 à 18, dans lequel le moyen de traitement est adapté au traitement parallèle.

20. Produit de programme informatique, exécutant un procédé selon l'une quelconque des revendications précédentes lorsqu'il est exécuté sur une unité informatique.

21. Système de robot comprenant

- un moyen de détection obtenant un emplacement d'objet cible,
- un moyen de traitement utilisé pour

o la génération d'un certain nombre d'ensembles de configurations d'exemple en utilisant une variation de fonction cinématique inverse et une fonction cinématique directe,
o l'analyse des ensembles de configurations d'exemple pour résoudre les incohérences,
o l'affectation à chaque ensemble de configurations d'exemple d'un poids, les poids représentant un degré d'incohérence d'une configuration d'articulation d'exemple étant donné l'emplacement de l'objet cible associé,

o l'apprentissage sur les ensembles de configurations d'exemple générés en mettant à jour l'estimation inverse,

o la détermination d'un ensemble de solutions possibles pour déplacer l'acteur vers l'emplacement de l'objet cible, et

o la sélection d'une solution spécifique parmi l'ensemble de solutions possibles, et

- un effecteur fixé de manière mobile au système de robot, dans lequel le moyen de traitement fournit des informations pour déplacer l'effecteur vers l'emplacement d'objet cible selon la solution sélectionnée.

22. Système selon la revendication 21, dans lequel l'estimation inverse est mise à jour par le biais d'une régression pondérée de récompense.

23. Système selon la revendication 21 ou 22, dans lequel un ensemble de configurations d'articulation d'exemple pondéré le plus élevé parmi les ensembles de configurations d'articulation d'exemple est sélectionné.

24. Système selon l'une quelconque des revendications 21 à 23,

- dans lequel une fonction cinématique inverse est évaluée en utilisant l'emplacement de l'objet cible,
- dans lequel un terme de perturbation est ajouté à la fonction cinématique inverse pour former la variation de fonction cinématique inverse représentant une configuration d'angle d'articulation, et
- dans lequel la fonction cinématique directe est utilisée pour obtenir la pose d'effecteur correspondant à la configuration d'articulation (perturbée).

25. Système selon l'une quelconque des revendications 21 à 24, dans lequel les ensembles de configurations d'exemple sont incompatibles lorsque la pose d'effecteur d'un ensemble de configurations d'exemple est identique à la pose d'effecteur d'un autre ensemble de configurations d'exemple, alors que la configuration d'angle d'articulation des ensembles de configurations d'exemple est différente.

26. Système selon l'une quelconque des revendications 21 à 25, dans lequel la fonction cinématique inverse est paramétrée avec un ensemble de paramètres.

27. Système selon l'une quelconque des revendications 21 à 26, dans lequel les paramètres pour les fonctions cinématiques inverses sont mis à jour dans le processus d'apprentissage.

28. Système selon l'une quelconque des revendications 21 à 27, dans lequel une estimation inverse est créée pour la fonction cinématique inverse et/ou dans lequel l'apprentissage génère des données d'apprentissage pour un certain nombre de variations de fonction cinématique inverse et/ou dans lequel les données d'apprentissage sont pondérées et/ou dans lequel l'estimation inverse est mise à jour avec les données générées pour toutes les variations de fonction cinématique inverse et/ou dans lequel l'apprentissage est répété jusqu'à ce que l'estimation inverse satisfasse à un critère de précision.

29. Système selon l'une quelconque des revendications 21 à 28, dans lequel le moyen de détection pour accepter un motif d'entrée est au moins un parmi un capteur, une interface matérielle et une interface logicielle.

30. Système selon l'une quelconque des revendications 21 à 29, dans lequel le moyen de traitement est un processeur et/ou une unité de traitement de signal formé de matériel et/ou de logiciel.

31. Système selon l'une quelconque des revendications 21 à 30, dans lequel le moyen de traitement est adapté au traitement parallèle.

Fig. 1

Fig. 2

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. GIENGER ; H. JANSSEN ; C. GOERICK.** Task-oriented whole body motion for humanoid robots. *Proceedings of the IEEE-RAS/RSJ International Conference on Humanoid Robots,* 2005, vol. 12
- Feedback-error-learning neural network for supervised motor learning. **M. KAWATO.** Advanced Neural Computers. Elsevier, 1990
- **D. WOLPERT ; M. KAWATO.** Multiple paired forward and inverse models for motor control. *Neural Networks,* 1998, 1317-1329
- **M. JORDAN ; D. RUMELHART.** Forward models: supervised learning with distal teacher. *Cognitive Science,* 1992, vol. 16, 307-354
- Computational aspects of motor control and motor learning. **M. I. JORDAN.** Handbook of Perception and Action: Motor Skills. Academic Press, 1996
- **J. PORRILL ; P. DEAN ; J. V. STONE.** Recurrent cerebellar architecture solves the motor-error problem. *Proc Biol Sci,* 2004, vol. 271 (1541), 789-796
- **J. PORRILL ; P. DEAN.** Recurrent cerebellar loops simplify adaptive control of redundant and nonlinear motor systems. *Neural Computation,* vol. 19 (1

- **Y. DEMIRIS ; A. DEARDEN.** From motor babbling to hierarchical learning by imitation: A robot developmental pathway. *Proceedings of the fifth international workshop on epigenetic robots (EPIROB): modeling cognitive development in robotic systems,* 2005, 31-37
- **D. DEMERS ; K. KREUTZ-DELGADO.** Learning global direct inverse kinematics. *Advances in Neural Information Processing Systems,* 1992
- **E. OYAMA ; T. M. S. TACHI.** Goal-directed property of on-line direct inverse modeling. *IEEE Int. Jnt. Conf. on Neural Networks,* 2000
- **S. COLOMBANO ; M. COMPTON ; M. BUALAT.** Goal directed model inversion. *IEEE Int. Jnt. Conf. on Neural Networks,* 1991
- **T. D. SANGER.** Failure of motor learning for large initial errors. *Neural Computation,* 2004, vol. 16 (9), 1873-1886
- **M. ROLF ; J. J. STEIL ; M. GIENGER.** Efficient exploration and learning of full body kinematics. *8th IEEE International Conference on Development and Learning (ICDL09,* 2009